# EUROPEAN PATENT SPECIFICATION

(11) **EP 1 302 329 B1**
(45) Date of publication and mention of the grant of the patent: **20.12.2006**
(21) Application number: 02023024.9
(22) Date of filing: 15.10.2002
(51) Int. Cl.: B41M 3/14

(54) **Printer output image forming method and forgery preventing method**
Druckbilderzeugungsverfahren und Verfahren zur Fälschungsvermeidung
Procédé de formation d'image sur une imprimante et procédé empêchant la falsification

(30) Priority: 16.10.2001 JP 2001317955
(43) Date of publication of application: 16.04.2003
(60) Divisional application: 06010546.7
(73) Proprietor: DAI NIPPON PRINTING CO., LTD., Tokyo 162-01 (JP)
(72) Inventor: Hamashima, Mitsuhiro, Dai Nippon Printing Co., Ltd, Shinjuku-ku, Tokyo 162-01 (JP); Kawabata, Kazuhiro, Dai Nippon Printing Co., Ltd., Shinjuku-ku, Tokyo 162-01 (JP); Shibasaki, Naoji, Dai Nippon Printing Co., Ltd., Shinjuku-ku, Tokyo 162-01 (JP)
(74) Representative: Müller-Boré & Partner Patentanwälte

(56) References cited:
- EP-A- 0 256 176
- EP-A- 0 930 979
- EP-A- 0 982 149
- US-A- 5 149 140
- US-A- 5 487 567
- US-A- 5 935 694

## Description

### TECHNICAL FIELD

The present invention relates to a printer output forming method and a forgery preventing method that put restraints on copying an image provided by a printer to prevent forgery.

### BACKGROUND ART

A printed sheet is provided with an invisible reproduction-restraining pattern. For example, two invisible dot patterns respectively having different dot pitches and having the same dot percentage are printed on a printed sheet such that contiguous parts of the two patterns have the same dot percentage. When the printed sheet is copied the dot pattern having the greater dot pitches becomes visible and discriminates the copy from the original printed sheet (JP-A No. 247089/1994).

Different copying machines have different resolution levels, respectively. An invention disclosed in JP-A No. 247088/1994 uses a plurality of patterns respectively having different resolution levels, and prints dots, line intervals or the thickness of intervals of a set of parallel lines arranged at intervals equal to twice the thickness in different gradations to facilitate identifying copies.

The foresaid printed sheets are printed in large quantities using an original plate. Therefore, the reproduction-restraining pattern is fixed, once the original plate is made. Therefore, another original plate must be made when the reproduction-restraining pattern needs to be changed.

Recently, there have been marketed printers capable of easily printing images corresponding to image data recorded on various digital media including PC cards, smart media, CD-ROMs and digital cameras. On-demand printers, i.e., large-scale printers, which are installed in convenience stores or places where people gather and capable of printing out images in response to a print start command given after depositing a predetermined charge, have been prevalently used in recent years.

Usually images printed by such printers are original images of individuals and it is requested that the images are not copied without permission. Photographs of stars, tickets and identification cards which are used to be printed by printing machines are printed by printers using digital image data. Therefore, it is very important to prevent the unpermitted copying and the forging of those printed images. Conventional reproduction-restraining patterns are not suitable for handy printers because those reproduction-restraining patterns are printed by using original plates.

US-A-5 149 140 discloses a security information document for providing information to a reader from an information source organization which includes a document substrate having a first area in which a half-tone warning image is printed, indicating that a copy of the document is an unauthorized document. A half-tone background image is printed in a second area on the substrate, with the second area surrounding the first area. A camouflage image extends over the document substrate for confusing the eye of an observer such that the warning image is not readily observed. One of the half-tone warning image and the half-tone background image is printed with a half-tone screen of such a line spacing that it is not readily reproducible by a copier.

### DISCLOSURE OF THE INVENTION

The present invention has been made to solve the foregoing problems and it is therefore an object of the present invention to provide a printer output forming method to be carried out by a printing system that does not use any original plate, capable of a reproduction-restraining function and a forgery preventing function.

According to the present invention, a printer output image forming method comprises the steps of: preparing image data including a background pattern which is a coarse dot pattern; preparing reproduction-restraining pattern data including a reproduction-restraining pattern which is a dense dot pattern; combining the image data and the reproduction-restraining pattern data to form a composite image data wherein the background pattern and the reproduction-restraining pattern are the same in the sum of the areas of dots in a unit area; and transferring a composite image including the background pattern and the reproduction-restraining pattern on the basis of the composite image data on a image-receiving sheet.

In the printer output image forming method according to the present invention, the composite image is transferred to the image-receiving sheet by an on-demand printer system using a thermal transfer printing method, an ink-jet printing method or an electrophtographic recording method.

In the printer output image forming method according to the present invention, the reproduction-restraining pattern is formed by combining dots having different shades. In the printer output image forming method according to the present invention, an additional different reproduction-restraining pattern is printed on the front or the back surface of the image-receiving sheet.

In the printer output image forming method according to the present invention, the additional reproduction-restraining pattern is formed from lines or dots finer than the transferred reproduction-restraining pattern.

In the printer output image forming method according to the present invention, a hologram is formed on the image-receiving sheet.

In the printer output image forming method according to the present invention, the reproduction-restraining pattern includes a warning message, date of issue, serial number, a designation, a logo or a concealed picture.

### BRIEF DESCRIPTION OF THE DRAWINGS

Fig. 1 is a block diagram of assistance in explaining a printer output image forming method in a preferred embodiment according to the present invention;
Fig. 2 is a view of a printed sheet carrying a reproduction-restraining pattern transferred thereto;
Fig. 3 is a view showing a background dot pattern and a reproduction-restraining dot pattern; and
Fig. 4 is a view of assistance in explaining a printer output image forgery preventing method in a preferred embodiment according to the present invention.

### BEST MODE FOR CARRYING OUT THE INVENTION

Preferred embodiment according to the present invention will be described hereinafter.

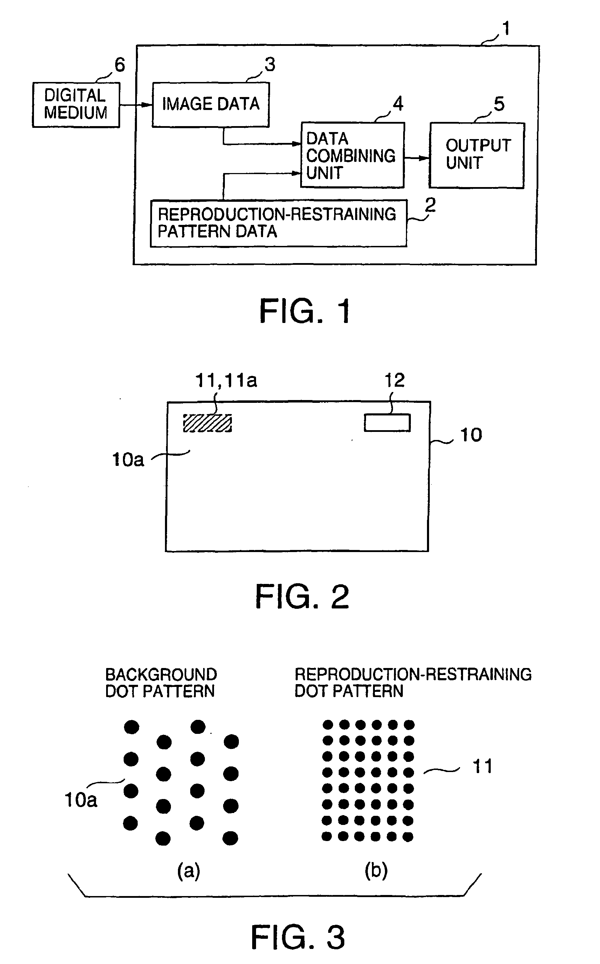

Fig. 1 is a block diagram of assistance in explaining a printer output image forming method in a preferred embodiment according to the present invention. Although preferred embodiments of the present invention will be described as applied to an on-demand printer system, the present invention is not limited in its practical application thereto and is applicable to optional printer systems.

An on-demand printer system 1 holds a reproduction-restraining pattern data 2. A data combining unit 4 combines image data 3 and reproduction-restraining pattern data 2 to provide a composite image data. An output unit 5 prints a composite image represented by the composite image data by a transfer printing method, such as a sublimation transfer printing method or a thermal transfer printing method. The reproduction-restraining pattern data 2 represents a reproduction-restraining pattern 11. The printed reproduction-restraining pattern 11 is visually unrecognizable. The image data 3 includes that of a background pattern 10a. The background pattern 10a is printed together with the reproduction-restraining pattern 11. When a user ticket issue menu is selected on the on-demand printer system 1 and fare is paid, image data 3 representing an image for a specified ticket is read from a hard disk, the image data 3 is combined with the reproduction-restraining pattern data 2 to provide a composite image data, and the background pattern 10a by the image data 3 is printed together with the reproduction-restraining pattern 11 on a recording sheet. The reproduction- restraining pattern data 2 does not need necessarily to be held by the on-demand printer system 1, but may be produced by the on-demand printer system 1 immediately before printing the composite image data.

Fig. 2 shows, by way of example, a printed sheet (printed image-receiving sheet) 10 carrying the reproduction-restraining pattern 11. As shown in Fig. 2, the reproduction-restraining pattern 11 is printed in an area outside or overlapping an image area of the surface of the printed sheet 10. The reproduction-restraining pattern 11 is visually unrecognizable. The background patter 10a is a coarse dot pattern of large dots as shown in Fig. 3(a), while the reproduction-restraining pattern 11 is a dense dot pattern of small dots as shown in Fig. 3(b). The background pattern 10a and the reproduction-restraining pattern 11 are the same in the sum of the areas of dots in a unit area. Therefore, it is difficult to recognize the reproduction-restraining patter 11 visually. When a reader having a resolving power and included in a copying machine is unable to read the dots of the reproduction-restraining pattern 11 correctly or when the reader is able to read the dots of the reproduction-restraining pattern 11 correctly but the copying machine is unable to record the reproduction-restraining patter 11 correctly, the reproduction-restraining pattern 11 consisting of the small dots cannot be correctly copied when the printed sheet 10 is copied. Consequently, parts corresponding to the dots of the reproduction-restraining pattern 11 in the printed sheet 10 become void, which is a proof of the copy. Although this printer output image forming method restrains copying by making the reproduction-restraining pattern 11 disappear to restrain copying, the printed sheet and a copy may be discriminated from each other by some pattern that is made to develop by a special operation like copying.

The size of the dots forming the reproduction-restraining pattern 11 is determined so as to conform to various copying machines respectively having different resolving powers. The size of the dots forming the reproduction-restraining pattern 11 is varied stepwise or continuously from position to position in a printing region so that the size of the dots corresponds to the different resolving powers of various copying machines. Thus, different parts, respectively corresponding to the different resolving powers of the copying machines, of the reproduction-restraining pattern 11 can be made obvious. The background patter 10a may be a dense dot pattern of small dots and the reproduction-restraining pattern 11 may be a coarse dot pattern of large dots. In this case, the background pattern 10a cannot be correctly copied, and the reproduction-restraining patter 11 becomes obvious. The reproduction-restraining pattern 11 may be formed by combining a set of coarsely arranged parallel lines and a set of densely arranged parallel lines. The reproduction-restraining pattern 11 may be formed by combining dots having different shades. Since a sublimation transfer printing method is capable of controlling the shade of each dot, a dot formed by printing two dots having a gradation of 128, and a dot formed by printing four dots of a gradation half that of the two dots have the same shade. The boundary between the reproduction-restraining pattern 11 and the background pattern 10a can be made obscure by combining dots respectively having different shades. An additional reproduction-restraining pattern 11a of fine lines may be printed on the image-receiving sheet 10 beforehand, and the coarse reproduction-restraining patter 11 may be formed on the image receiving sheet 10 by a transfer printing method to form a pattern consisting of the coarsely arranged lines and the densely arrange lines . There is not any restrictions on the shapes and colors of the reproduction- restraining patters 11 and 11a.

The present invention is not limited in its practical application to the foregoing embodiment and various modifications are possible. The present invention may be used in combination with other reproduction preventing techniques.

For example, a reproduction-restraining pattern 11 representing a logo may be printed beforehand on the front or the back surface of the image-receiving sheet 10, the reproduction-restraining pattern 11 may be printed on the image-receiving sheet 10 beforehand by a micro printing method, the reproduction-restraining pattern 11 may be formed by partly changing energy when the overcoating layer is transferred or a hologram 12 may be formed in the image-receiving sheet 10. The reproduction-restraining pattern 11 and the background pattern 10a may be formed by transfer printing using dyes or pigments having different characteristics, respectively.

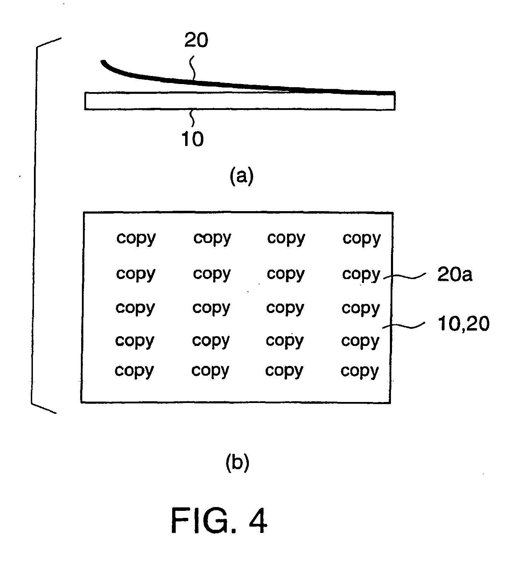

Fig. 4 is a view of assistance in explaining a printer output image forgery preventing method in a preferred embodiment according to the present invention.

A background pattern (image pattern) 10a as shown in Fig. 3 (a) is printed on a printed sheet (image-receiving sheet) 10. A discrimination pattern 20a of a screen ruling or a dot angle different from that of the background pattern 10a shown in Fig. 3(a) is formed on the image-receiving sheet 10 such that, when a transparent sheet 20 is superposed on the printed sheet 10, words "copy" as shown in Fig. 4(b) are caused to appear by the moiré effect of superposition of the discrimination pattern 20a on the background pattern (image pattern) 10a. The arrangement of the words 'copy' is the discrimination pattern 20a to discriminate the printed sheet 10 from its copy. It is possible to provide the printed sheet 10 with a reproduction-restraining effect by printing a reproduction-restraining pattern 11 on the printed sheet 10. The transparent sheet 20, similarly to the printed sheet 10, can be printed by a print system.

The reproduction-restraining pattern 11 and the discrimination pattern 20a for forgery prevention may be an optional characters or patterns, such as a warning message, date of issue, serial number, a designation, a logo or a concealed picture. The present invention is applicable not only to reproduction-restraining but also to making a concealed picture become visible and to making an answer to a quiz to appear when the printed sheet 10 is copied or when a transparent sheet is superposed on the printed sheet 10.

A forgery preventing function can be achieved by using fluorescent colors that cannot be reproduced by ordinary printers for printing an image on the image-receiving sheet 10 by a thermal transfer printing method.

As apparent from the foregoing description, according to the present invention, it is possible to provide a printed sheet with a reproduction-restraining function and effects of a concealed picture simply by combining a reproduction-restraining pattern data produced by combining lines or dots of different densities and dots of different shades with image data of an image to be printed. It is possible to provide a printed sheet with a forgery preventing function by a similar method.

## Claims

1. A printer output image forming method comprising the steps of:
preparing image data (3) including a background pattern (10a), which is a coarse dot pattern;
preparing reproduction-restraining pattern data (2) including a reproduction-restraining pattern (11), which is a dense dot pattern;
combining the image data (3) and the reproduction-restraining pattern data (2) to form a composite image data. wherein the background pattern (10a) and
the reproduction-restraining pattern (11) are the same in the sum of the areas of dots in a unit area; and
transferring a composite image including the background pattern (10a) and
the reproduction-restraining pattern (11) on the basis of the composite image data (3) on an image-receiving sheet (10).

2. The printer output image forming method according to claim 1, wherein the composite image is transferred to the image-receiving sheet (10) by an on-demand printer system (1) using a thermal transfer printing method, an ink-jet printing method or an electrophotographic recording method.

3. The printer output image forming method according to claim 1 or 2, wherein the reproduction-restraining pattern (11) is formed by combining dots having different shades.

4. The printer output image forming method according to anyone of claims 1 to 3, wherein an additional reproduction-restraining pattern (11) is printed on a front or a back surface of the image-receiving sheet (10).

5. The printer output image forming method according to claim 4, wherein the additional reproduction-restraining pattern (11) is formed from lines or dots finer than the transferred reproduction-restraining pattern (11).

6. The printer output image forming method according to claim 5, wherein a hologram is formed on the image-receiving sheet (10).

7. The printer output image forming method according to anyone of claims 1 to 6 , wherein the reproduction-restraining pattern (11) includes a warning message, date of issue, serial number, a designation, a logo or a concealed picture.

## Patentansprüche

1. Druckbilderzeugungsverfahren, umfassend die Schritte:
Vorbereiten bzw. Bilden von Bilddaten (3), beinhaltend ein Hintergrundmuster (10a), welches ein grobes Punktmuster ist;
Bilden von eine Reproduktion beschränkenden Musterdaten (2), beinhaltend ein eine Reproduktion beschränkendes Muster (11), welches ein dichtes Punktmuster ist;
Kombinieren der Bilddaten (3) und der eine Reproduktion beschränkenden Musterdaten (2), um zusammengesetzte Bilddaten auszubilden, wobei das Hintergrundmuster (10a) und das eine Reproduktion beschränkende bzw. behindernde Muster (11) gleich in der Summe von Punktflächen in einer Einheitsfläche sind; und
Transferieren eines zusammengesetzten Bilds, beinhaltend das Hintergrundmuster (10a) und das die Reproduktion beschränkende Muster (11) auf der Basis der zusammengesetzten Bilddaten (3) auf einem ein Bild empfangenden Blatt (10).

2. Druckbilderzeugungsverfahren nach Anspruch 1, wobei das zusammengesetzte Bild auf das das Bild empfangende bzw. Bildempfangsblatt (10) durch ein Anfragedruckersystem (1) unter Verwendung eines Thermotransferdruckverfahrens, eines Tintenstrahldruckverfahrens oder eines elektrophotographischen Aufzeichnungsverfahrens übertragen wird.

3. Druckbilderzeugungsverfahren nach Anspruch 1 oder 2, wobei das eine Reproduktion beschränkende Muster (11) durch ein Kombinieren von Punkten gebildet wird, die unterschiedliche Schattierungen aufweisen.

4. Druckbilderzeugungsverfahren nach einem der Ansprüche 1 bis 3, wobei ein zusätzliches, eine Reproduktion beschränkendes Muster (11) auf eine vordere oder rückwärtige Fläche des Bildempfangsblatts (10) gedruckt wird.

5. Druckbilderzeugungsverfahren nach Anspruch 4, wobei das zusätzliche, eine Reproduktion beschränkende Muster (11) aus Linien oder Punkten feiner als das transferierte bzw. übertragene, eine Reproduktion beschränkende Muster (11) gebildet wird.

6. Druckbilderzeugungsverfahren nach Anspruch 5, wobei ein Hologramm auf dem das Bild empfangenden Blatt (10) ausgebildet wird.

7. Druckbilderzeugungsverfahren nach einem der Ansprüche 1 bis 6, wobei das die Reproduktion beschränkende Muster (11) eine Warnungsnachricht, ein Datum einer Ausgabe, eine Seriennummer, eine Bezeichnung, ein Logo oder ein verstecktes Bild beinhaltet.

## Revendications

1. Procédé de formation d'une image sortie sur une imprimante comprenant les étapes consistant à:
préparer des données (3) d'image incluant un motif (10a) d'arrière plan, qui est un motif à gros points;
préparer des données (2) de motif de prévention de reproduction incluant un motif (11) de prévention de reproduction, qui est un motif à points denses;
combiner les données (3) d'image et les données (2) de motif de prévention de reproduction pour former des données d'image composite, dans lesquelles dans la somme des superficies de points dans une superficie unitaire le motif d'arrière-plan et le motif de prévention de reproduction sont les mêmes; et
transférer sur une feuille réceptrice (10) d'image une image composite incluant le motif (10a) d'arrière-plan et le motif (11) de prévention de reproduction sur la base des données (3) d'image composite.

2. Procédé de formation d'une image sortie sur une imprimante selon la revendication 1, dans lequel l'image composite est transférée à la feuille réceptrice (10) d'image par un système d'imprimante (1) à la demande en utilisant un procédé d'impression par transfert thermique, un procédé d'impression à jet d'encre ou un procédé d'enregistrement électrophotographique.

3. Procédé de formation d'image sortie sur une imprimante selon la revendication 1 ou 2, dans lequel le motif (11) de prévention de reproduction est formé en combinant des points de nuances différentes.

4. Procédé de formation d'image sortie sur une imprimante selon l'une quelconque des revendications précédentes, dans lequel un motif additionnel (11) de prévention de reproduction est imprimé sur une surface avant ou une surface arrière de la feuille réceptrice (10) d'image.

5. Procédé de formation d'image sortie sur une imprimante selon la revendication 4, dans lequel le motif additionnel (11) de prévention de reproduction est formé de lignes ou de points plus fins que le motif transféré (11) de prévention de la reproduction.

6. Procédé de formation d'image sortie sur une imprimante selon la revendication 5, dans lequel un hologramme est formé sur la feuille réceptrice (10) d'image.

7. Procédé de formation d'une image sortie sur une imprimante selon l'une quelconque des revendications précédentes, dans lequel le motif (11) de prévention de la reproduction inclut un message d'avertissement, une date d'émission, un numéro de série, une désignation, un logo ou une représentation masquée.
